## Europäisches Patentamt
## European Patent Office
## Office européen des brevets

(19)

(11) Publication number: **0 278 756**
B1

(12) # EUROPEAN PATENT SPECIFICATION

(45) Date of publication of the patent specification:
24.10.90

(51) Int. Cl.⁵: **G11B 11/10**, H01F 7/20, G11B 13/04, G11B 5/127

(21) Application number: 88301127.2

(22) Date of filing: 11.02.88

(54) **Magnetic field generators.**

(30) Priority: 13.02.87 JP 18893/87
16.03.87 JP 37126/87
26.05.87 JP 127182/87

(43) Date of publication of application:
17.08.88 Bulletin 88/33

(45) Publication of the grant of the patent:
24.10.90 Bulletin 90/43

(84) Designated Contracting States:
DE FR GB NL

(56) References cited:
EP-A- 0 031 216
WO-A-86/06534

PATENT ABSTRACTS OF JAPAN, vol. 10,
no. 330 (P-514)(2386), 11th November 1986; &
JP-A-61 137 201
PATENT ABSTRACTS OF JAPAN, vol. 6,
no. 206 (P-149)(1084), 19th October 1982; &
JP-A-57 113 406

(73) Proprietor: Oki Electric Industry Company, Limited, 7-12, Toranomon 1-chome Minato-ku, Tokyo 105(JP)

(72) Inventor: Tanoshima, Katsuhide, Oki Electric Ind. Co. Ltd. 7-12 Toranomon 1-chome, Minatoku Tokyo(JP)
Inventor: Suzuki, Yasuhiro, Oki Electric Ind. Co. Ltd. 7-12 Toranomon 1-chome, Minatoku Tokyo(JP)
Inventor: Nagata, Shizuo, Oki Electric Ind. Co. Ltd. 7-12 Toranomon 1-chome, Minatoku Tokyo(JP)
Inventor: Shimizu, Yasuo, Oki Electric Ind. Co. Ltd. 7-12 Toranomon 1-chome, Minatoku Tokyo(JP)

(74) Representative: SERJEANTS, 25, The Crescent King Street, Leicester, LE1 6RX(GB)

ACTORUM AG

## Description

The invention relates to magneto-optic systems comprising magnetic field generators for use in magneto-optic recording.

The magneto-optic system, which involves an optical disk capable of erasable recording, uses the following principle: A magnetic film is heated with a laser spot and a magnetic field of several hundred oersteds is applied. When the heat is removed, the film is magnetized in the direction of the external field applied. If one direction of magnetization signifies "recording" or bit "1", the opposite direction signifies "erasure" or bit "0". Known generators involve the rotation of a magnet which has proved difficult in practice.

Patent Specification EP-A 31 216 discloses a magnetic head comprising a flat coil and a ferromagnetic main pole piece arranged in the centre of the coil perpendicular to the plane of the coil. The magnetic core may be provided on the same substrate as the flat coil, and the substrate may be ferromagnetic.

Patent Specification WO-A 8 606 534 describes a magnetic field inverting head in combination with a magneto-optic disk.

A system according to the invention comprises a disk rotatably enclosed in a cassette provided with a window, and a magnetic generator having a plate, a pole piece on a face of the plate, and a coil in contact with the face, wound flatly around the pole piece and spreading out radially to generate a magnetic field through the pole piece when an electric current is passed through the coil, a portion of the pole piece being capable of projecting beyond the coil and into the window.

The pole piece may first be disposed substantially perpendicular to the magnetic plate. The magnetic field generated by the flow of electricity flows into the pole piece which may be at the centre of the coil. When recording, perpendicular magnetization may be performed using the perpendicular (to the magnetic disk) component of the magnetic field. When changing the direction of the magnetic field generated, the direction of the electric current following through the coil can be reversed. Since the coil is flat and the pole piece projects from the face of the coil, the pole piece alone can be brought into the proximity of the surface of the disk, while the flat coil stays outside a window provided for the access of the pole piece to the disk surface. Thus the generator itself may be made thin and small.

## Drawings

Figure 1 illustrates a conventional external magnetic field generator;

Figure 2 illustrates another conventional external magnetic field generator:

Figure 3 is a perspective view of an external magnetic field generator according to the invention;

Figure 4 is a cross section on X-X in Figure 3;

Figures 5A and 5B are plan views of a disk cassette in different states;

Figure 5C is a cross section of Figure 5A;

Figure 6 explains the operation of the generator of Figure 3;

Figure 7 is a graph showing the local intensity generated by the generator of Figure 3;

Figures 8A, 8B and 8C illustrate a second generator according to the invention.

Figures 8D and 8E show a modification of a pole piece and bracket in the Figure 8 generator;

Figure 9A is a perspective view of a magneto-optic disk device with the Figure 8 generator installed;

Figures 9B and 9C are cross sections on the Z-Z' of Figure 9A;

Figure 10 is a perspective view of a third generator according to the invention;

Figure 11 is a cross section on Y-Y of Figure 10;

Figure 12 is a perspective view showing the use of the Figure 10 generator on a magneto-optic disk;

Figures 13 and 14 are cross sections on Z-Z in Figure 12, respectively showing states of the pole piece during and after the insertion of a disk.

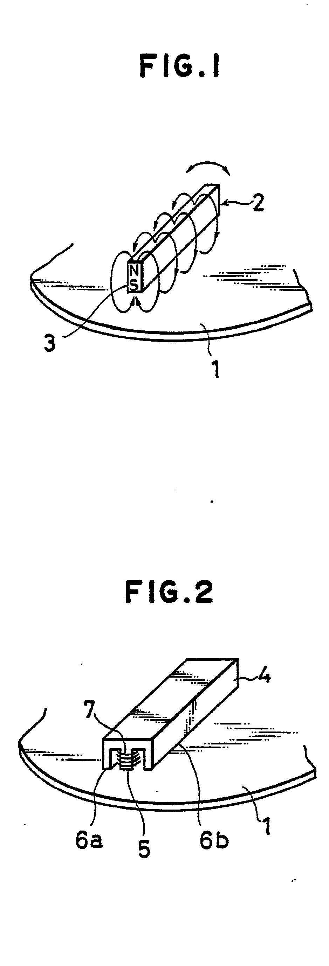

Figure 1 shows a conventional generator comprising a permanent magnet 2 mounted on a magneto-optic disk 1 for recording. An actuator using a magnet etc. (not shown) rotates the magnet 2 about an axis 3. The magnet 2 is elongated in the direction of a radius of the disk 1 and is magnetized N and S as shown. The magnetic field component of this magnet, which is perpendicular to the disk, contributes to the magnetic inversion of the magnetic film of disk 1. By rotating the magnet 2 180° about the axis 3, magnetic recording and erasure are performed.

Figure 2 shows another conventional generator comprising an electromagnet 4, elongated and extending in the direction of the radius of the disk 1 for recording. Protruding teeth 5, 6a and 6b are formed on its bottom face. A coil 7 is wound around a central tooth 5 and a magnetic field is generated by sending an electric current through the coil 7. The field so generated enters the side teeth 6a and 6b from the central tooth 5, and its component which is perpendicular to the disk becomes the external magnetic field, performing recording or erasure on the magnetic film. The inversion of the magnetism of the magnetic field is accomplished by reversing the direction in which the electric current is sent.

In the Figure 1 generator, the permanent magnet must be mechanically rotated by an actuator when inverting the magnetism of the field. In order to rotate a magnet which has a large amount of inertia, ten to several hundred milliseconds of operating time is required, which limit its usefulness.

In the Figure 2 generator, in order for the coil 7 to have a suitable number of turns, the tooth 5 must be high. The side teeth 6a and 6b are as high as the tooth 5. Thus the entire generator device has to be large, and miniaturization and thinning of magneto-optic disk is difficult.

## Best Mode

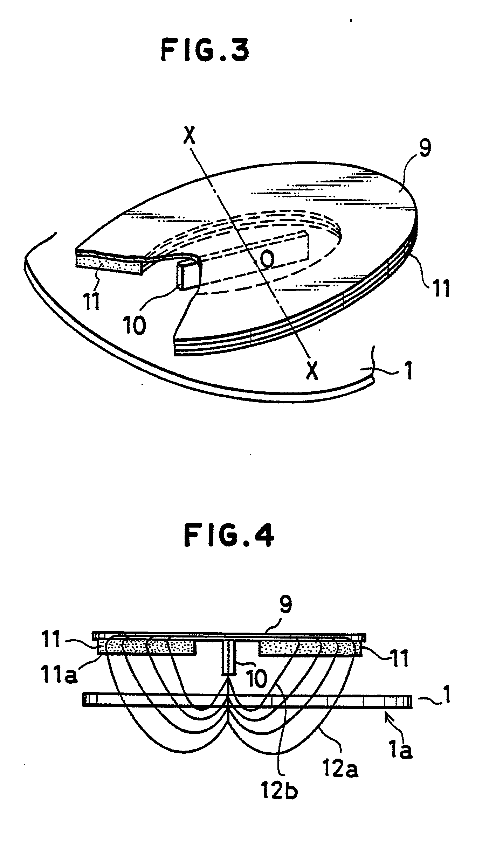

In Figure 3 the generator device comprises a substantially flat magnetic plate 9, a pole piece 10 fixed perpendicular to the bottom of the magnetic plate 9, and a coil 11 at the centre of which is the pole piece 10. The coil 11 is in contact with the bottom of the plate 9, and wound flat, spreading out radially. The pole piece 10 projects from a lower surface 11a (Figure 4a) of the coil 11. The generator is mounted above a magneto-optic disk 1 for recording.

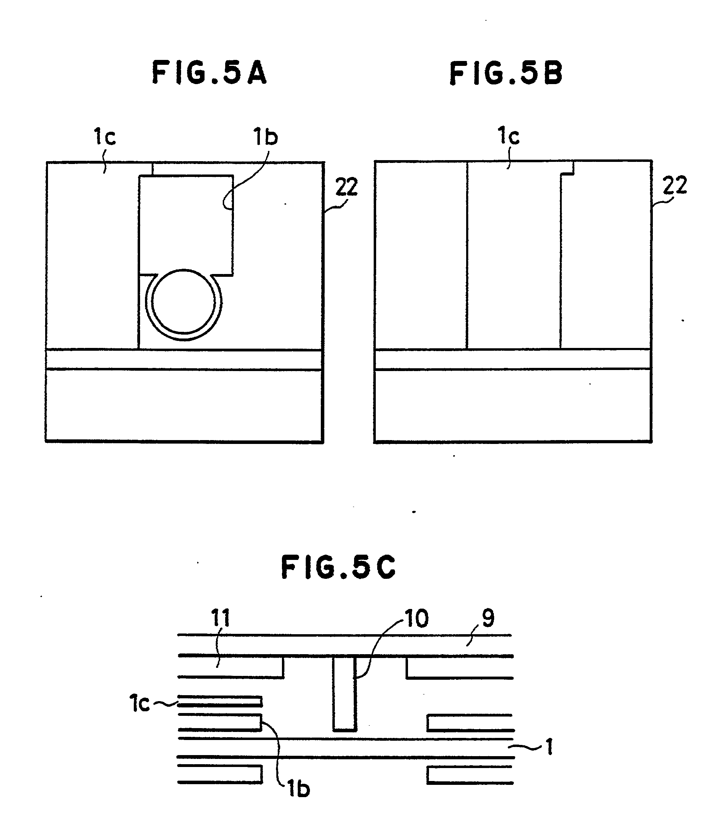

In Figures 5A, 5B and 5C the disk 1 is rotatably enclosed in a cassette 22. The cassette 22 is provided with a window 1b which is opened and closed by a shutter 1c. When the shutter 1c is opened, the disk 1 becomes accessible to the generator, that is the projecting tip of the pole piece 10 is placed in the window in the proximity of the surface of the disk 1. The coil 11 is larger than the window 1b so it cannot be brought into the window but is situated outside when the tip of the pole piece 10 is near the surface of the disk 1.

As shown in Figure 4, when electric current is sent through the coil 11, a magnetic field is generated. The field passes through the atmosphere, the pole piece 10 and plate 9. The magnetic field generated, and particularly at the tip of pole piece 10 where it is perpendicular to recording face 1a, contributes to the inversion of the magnetization of the recording face 1a. Magnetic flux 12a and 12b from the magnetic plate 9 passes through the outer and inner parts of coil 9 respectively.

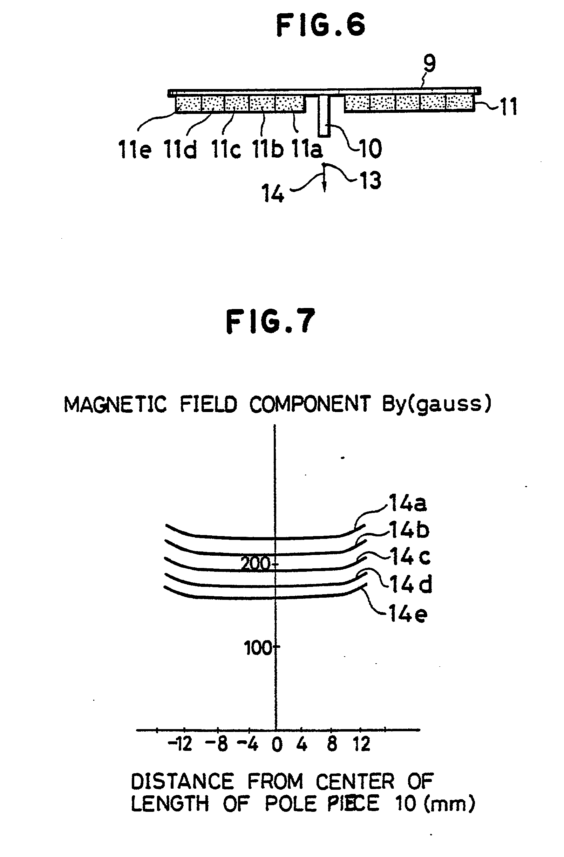

Figure 6 is an imaginary section through the coil 9 divided from its interior to its exterior into sections 11a, 11b, 11c,...11e. Figure 7 shows the components of the magnetic field due to the respective sections. The vertical axis shows the magnetic field in gauss, while the horizontal axis shows the above-mentioned distances. The magnetic components shown are in the neighbourhood 13 of the tip of the pole piece 10, parallel to the pole piece 10 or perpendicular to the face of the magnetic plate 9. In Figure 7 the strength of the magnetic field component from coil part 11a is shown by 14a, from the coil part 11b is 14b and so on up to coil part 11e which is shown by 14e. It is clear from this graph that magnetic field components 14a, 14b,...14e created by coil parts 11a, 11b,...11e (which are shown as separate) make very little difference, whether at the interior (11a) of coil or at the exterior (11e) of coil, and all contribute to the magnetic field component 14. In other words, decrease in the magnetic field strength due to flattening the coil so that it spreads out radially is small. Consequently, there is no need to wind the coil only in the area close to the pole piece 10. Even if the coil is wound flat and so that it spreads out radially, it displays full performance with almost no decrease in magnetic recording efficiency. Since the coil 9 is flat and thin, the space required above the disk for the generator device is small.

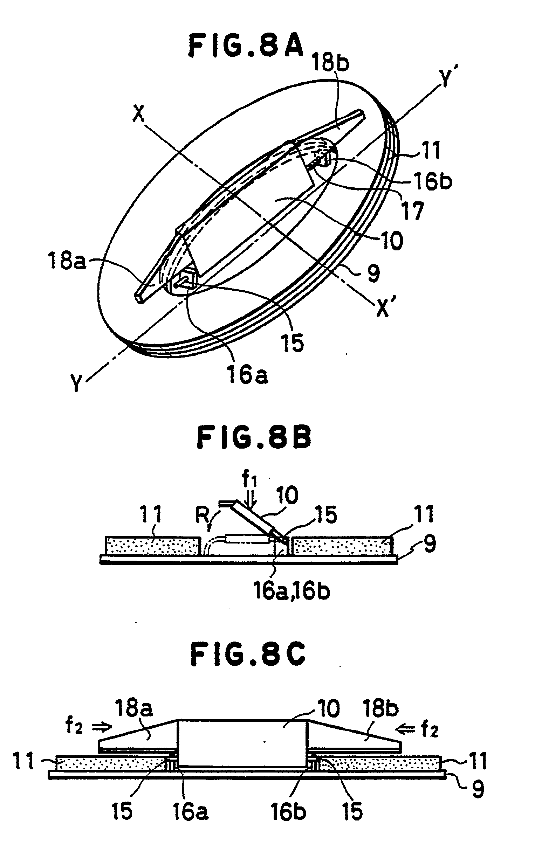

Figures 8A, 8B and 8C show a second generator featured by a structure for folding the pole piece. Reference numbers which are the same as those previously referred to indicate similar elements. A shaft 15 is provided at both ends of the pole piece 10 as an axis for rotation. Brackets 16a and 16b support the shaft 15 so that it rotates freely. The brackets 16a, 16b are formed of a magnetic material to permit passage of the flux from the pole piece 10. A spring 17 holds the pole piece 10 at a specific angle to the face of the magnetic plate 9 and coil 11. Guide plates 18a and 18b of non-magnetic material are provided on both ends of the pole piece 10. Magnetic flux does not pass through the guide plates 18a,18b, and so deviation away from the tip of pole piece 10 is prevented.

In the normal state in which no force is applied to the pole piece 10 and guide plates 18a and 18b, the action of the spring 17 keeps the pole piece 10 and guide plates 18a and 18b in an open state at an angle of 45° to 60° to the face of magnetic plate 9 and coil 11. When, as shown in Figure 8B, a force $f_1$ perpendicular to the face of magnetic plate 9 and coil 11 is applied, the pole piece 10 rotates in the direction of the arrow R, becomes parallel to the face of magnetic plate 9, and is folded into the interior of the centre of coil 11. When the force $f_1$ is removed, the pole piece 10 is restored to its original position by the spring 17. When, as shown in Figure 8C, a horizontal force $f_2$ is applied to the end (sloping face) of the guide plates 18a and 18b in the normal state, the pole piece 10 is rotated and folded in the same way.

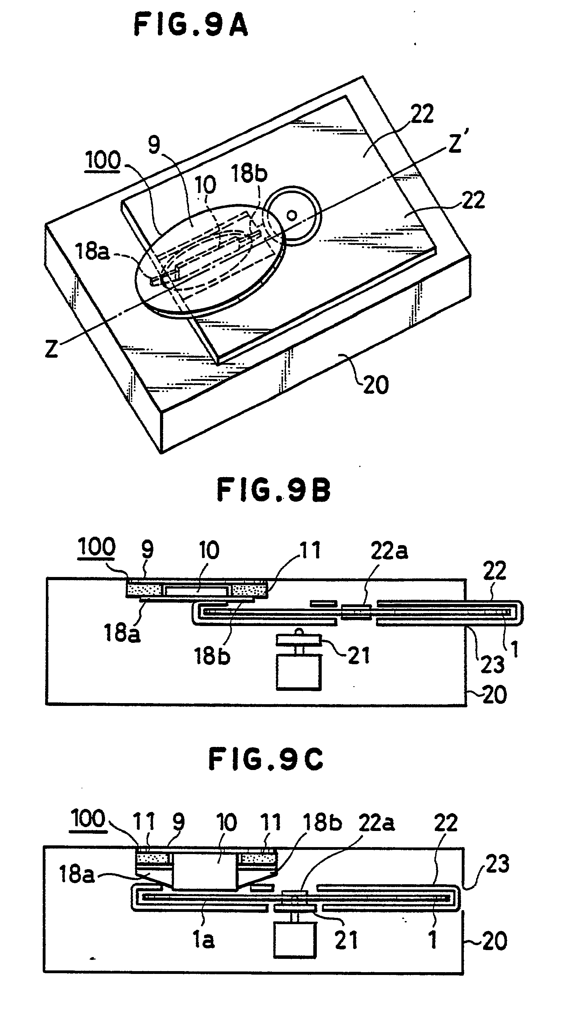

Referring to Figures 9A, 9B and 9C, a generator 100 is mounted in the upper part of the interior of a magneto-optic disk device 20. A spindle section 21, which rotates and drives the magneto-optic disk 1, is provided in the central part. To perform the recording and erasure of data, the disk cassette 22 containing a magneto-optic disk, is inserted through an opening 23 in the upper part of a side of the device 20. The cassette 22 does not initially come in contact with the spindle section 21. The tip of the cassette 22, inserted through the opening 23, pushes up the pole piece 10 and guide plates 18a and 18b, touching the tilted end of the nearer guide plate 18b attached to the pole piece 10 (Figure 9B). The pole piece 10 and guide plates 18a and 18b remain in the pushed up state until the cassette 22 is completely inserted.

The cassette 22 is next dropped down by a structure not shown in the drawings, so that a suction cup 22a and spindle section 21 are joined. The pole piece 10 and guide plates 18a and 18b abut with the top of the cassette 22 as they are dropped, during which time they gradually open up, keeping pace with the dropping of the cassette 22. A little before the suction cup 22a and spindle section 21 are fully joined, the pole piece 10 adopts a 45° to 60° angle, its opening is completely finished. In this state, the necessary gap is established between the magneto-optic disk 1 and the tip of pole piece 10, and the strength of magnetic field necessary for recording appears on recording face 1a (Figure 9C).

Ejection is as follow. The cassette 22 rises, but because the pole piece 10 and guide plates 18a and 18b are attached at a 45° to 60° slant, they fold up easily pushing up perpendicularly from the bottom. The cassette 22 reaches the opening 23 as during insertion, pushing the pole piece 10 and guide plates 18a and 18b out of the way.

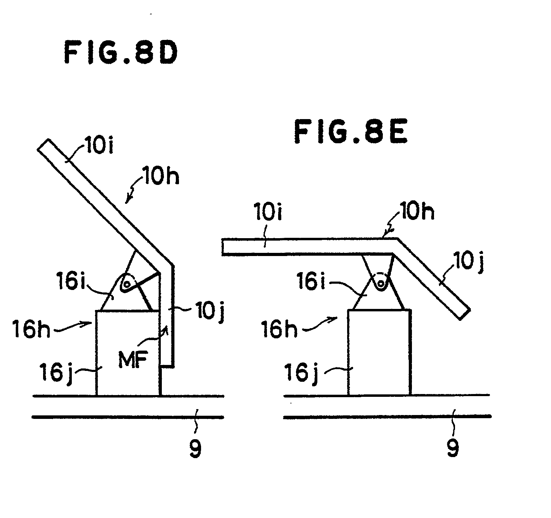

Figures 8D and 8E show a modification of the assembly of the pole piece and the bracket. A pole piece 10b comprises a first strip 10i and a second strip 10j which are inclined to each other and joined together. The bracket 16h comprises a rod 16j fixed to magnetic plate 9 and a bearing member 16i. The pole piece 10h is journalled by the bearing member 16i. When the pole piece 10h is in the first position (Figure 8D) in which tip of the pole piece is near the disk surface, the second strip 10j is in contact with the side surface of rod 16j to form a path for magnetic flux MF, and also to provide a stop for the rotation of pole piece by the action of the spring. During insertion or ejection of the disk in a cassette, the pole piece 10h is in the second position in which the top of the pole piece 10h is away from the disk surface, as shown in Figure 8E.

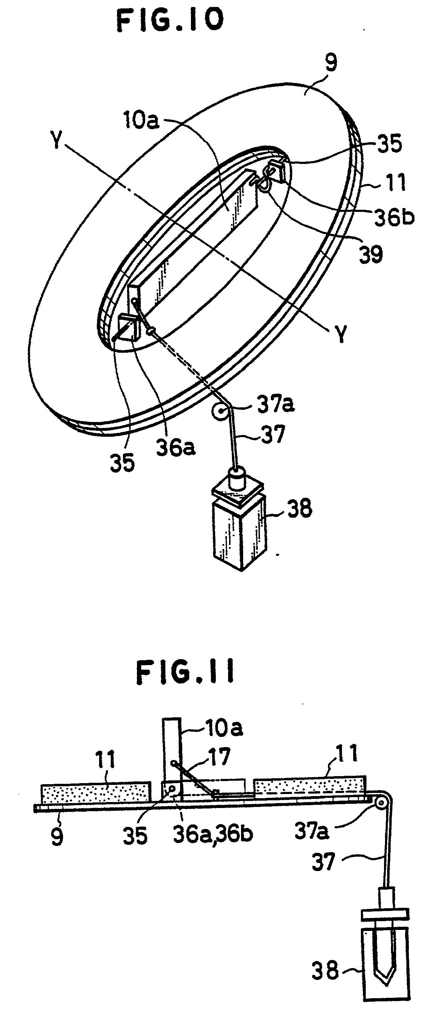

In Figure 10, a rotary shaft 35 is provided on the upper part of both end faces of a pole piece 10a and supported by a bracket 36. One of the end faces of the pole piece 10a is (Figure 11) joined to a wire 37 at a distance from the shaft 35. The other end of this wire 37 is joined to a solenoid magnet 38 through roller 37a. Also, in order to maintain the pole piece 10a perpendicular to the magnetic plate 9 and flat coil 11, a spring 39 is provided between shaft 35 and bracket 36b.

In the normal state, the pole piece 10a is maintained perpendicular to the magnetic plate 9 and coil 11 by the spring 39. When solenoid magnet 38 is excited, the wire 37 is pulled and the pole piece 10a rotates about the shaft 35. As shown by the dotted line in Figure 11, the pole piece 10a becomes parallel to the coil 11. Thus the pole piece 10a performs a folding operation on the excitation of solenoid magnet 38.

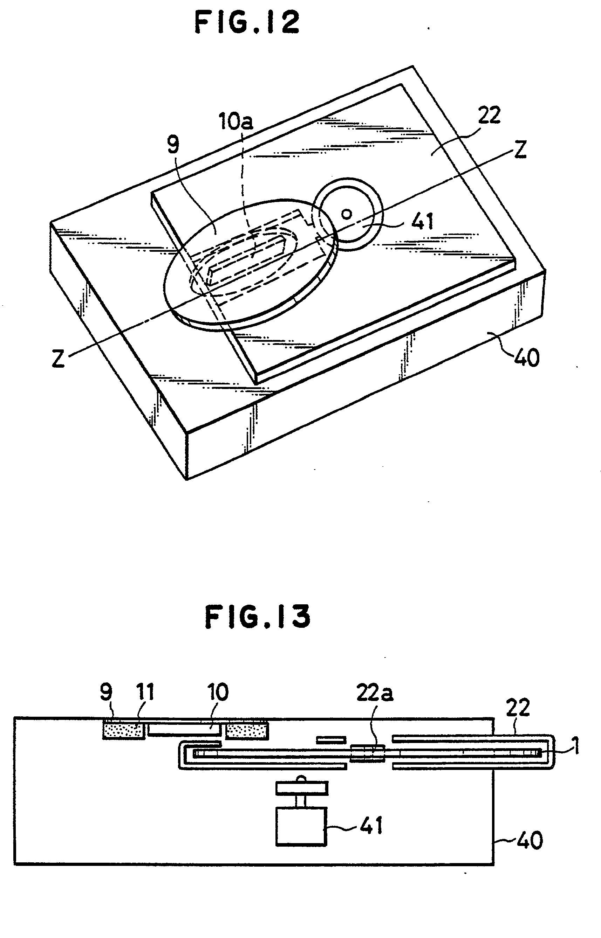

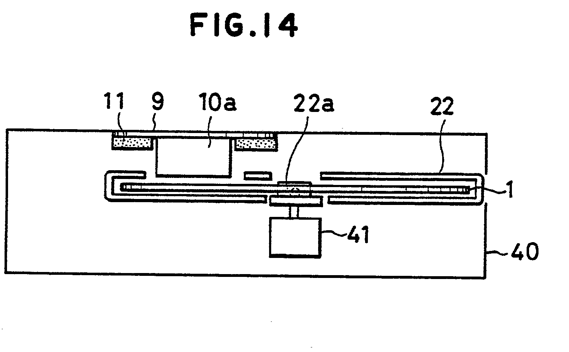

In Figures 12, 13 and 14, a magneto-optic recorder has the Figure 10 generator and a spindle section 41 for driving the magneto-optic disk 1 provided inside a magneto-optic disk device 40. In order to record and erase data, the cassette 22 is inserted in the opening of this device 40 as shown in Figure 13. When it is inserted, the pole piece 10 is folded up by the wire 37 due to the excitation of solenoid magnet 38 so that the cassette 22 does not come in contact with the pole piece 10a or spindle section 41. When the cassette 22 is inserted even farther it is dropped by a structure not shown. The suction cup of the centre hole of the disk 1 is then fitted onto the protruding part of spindle section 41. This completes the insertion of the cassette 22.

When the disk 1 has been inserted, the excitation of the solenoid magnet 18 is relieved, causing the pole piece 10a to stand up by the recovery power of the spring 39 and become perpendicular to the magnetic plate and the flat coil 1 (Figure 14). In other words, an appropriate gap is established between the tip of pole piece 10a and the recording face of the magnetic disk 1, and it is possible to obtain the strength of the magnetic field needed to perform recording or erasure. The smallest gap necessary can be maintained. By making it possible for the pole piece to rotate, it is possible to choose the distance between the pole piece and the magnetic disk in response to whether the generator is to be used. Consequently, there is excellent performance without lowering of efficiency in recording on magnetic disks. The inversion of the direction of the magnetic field generated can be accomplished by reversing the direction of the electric current flowing through it.

## Claims

1. A system comprising a disk (1) rotatably enclosed in a cassette (22) provided with a window (1b), a magnetic field generator comprising a magnet having a pole piece (10) on a face of a magnetic plate (9) and a coil (11) in contact with the face of the plate (9) wound flatly around the pole piece (10) and spreading out radially to generate a magnetic field through the pole piece (10) when an electric current is passed through the coil (11), characterized in that in a magneto-optic system a portion of the pole piece (10) is capable of projecting beyond the coil (11) and into the window (1b).

2. A magneto-optic system according to claim 1 wherein the pole piece (10) is fixed substantially perpendicularly to the face of the plate (9).

3. A magneto-optic system according to claim 1 wherein the pole piece (10) is mounted on the plate (9) so that it is able to rotate about an axis (15) parallel to the face of the plate (9).

4. A magneto-optic system according to claim 3 comprising a resilient member (17) which holds the pole piece (10) at a specified angle to the face of the plate (9), and a guide plate (18) at the end of the pole piece (10) which rotates the pole piece (10) to be parallel with the face of the plate (9) when a horizontal force (f2) towards the face of the plate (9) larger than the force of the resilient member (17) is applied.

5. A magneto-optic system according to claim 3 or claim 4 comprising a bracket (16) attached to the face of the plate (9), the pole piece (10) being rotatably mounted on the bracket (16) between a first position in which an end of the pole piece (10) projects from the face of the coil (11) opposite the plate (9) and a second position in which the end of the pole piece (10) is closer to the plate (9).

6. A magneto-optic system according to claim 5 wherein the bracket (16) is formed of a magnetic material and forms part of a path for magnetic flux which passes through the pole piece (10).

7. A magneto-optic system according to claim 5 or claim 6 wherein the pole piece (10) has a surface slanted with respect to the face of the plate (9) in its first position.

8. A magneto-optic system according to any of claims 5 to 7 wherein the pole piece (10) comprises a first strip (10i) and a second strip (10j) which are inclined with each other and joined together, the second strip (10j) being in contact with the bracket (16) when the pole piece (10) is in the first position.

## Patentansprüche

1. System mit einer Scheibe (1), welche drehbar in einer Kassette (22) eingeschlossen ist, die mit einem Fenster (1b) versehen ist, wobei ein, Magnetfeldgenerator einen Magnete mit einem Polschuh (10) auf einer Oberfläche einer magnetischen Platte (9) sowie eine Spule (11) umfaßt, die sich in Kontakt mit der Oberfläche der Platte (9) befindet und flach um den Polschuh (10) herumgewickelt ist und sich radial ausdehnt, um ein Magnetfeld durch den Polschuh (10) hindurch zu erzeugen, wenn ein elektrischer Strom durch die Spule (11) hindurchgeleitet wird, dadurch gekennzeichnet, daß in einem magneto-optischen System ein Abschnitt des Polschuhs (10) in der Lage ist, über die Spule (11) hinaus und in das Fenster (1b) hinein zu ragen.

2. Magneto-optisches System nach Anspruch 1, wobei der Polschuh (10) im wesentlichen rechtwinkelig zur Oberfläche der Platte (9) befestigt ist.

3. Magneto-optisches System nach Anspruch 1, wobei der Polschuh (10) an der Platte (9) so befestigt ist, daß er in der Lage ist, um eine Achse (15) zu rotieren, welche parallel zu der Oberfläche der Platte (9) ist.

4. Magneto-optisches System nach Anspruch 3, mit einem federnden Glied (17), welches den Polschuh (10) unter einem bestimmten Winkel zu der Oberfläche der Platte (9) hält, und einer Führungsplatte (18) am Ende des Polschuhs (10), welche den Polschuh (10) in, eine mit der Oberfläche der Platte (9) parallele Stellung rotiert, wenn eine horizontale Kraft (f2) in Richtung auf die Oberfläche der Platte (9), die größer als die Kraft des federnden Gliedes (17) ist, angewandt wird.

5. Magneto-optisches System nach Anspruch 3 oder Anspruch 4, mit einem Träger (16), welcher auf der Oberfläche der Platte (9) befestigt ist, wobei der Polschuh (10) auf dem Träger (16) zwischen einer ersten Position, in der ein Ende des Polschuhs (10) über die Oberfläche der Spule (11), der Platte (9) gegenüberliegend, hinausragt, und einer zweiten Position, in der das Ende des Polschuhs (10) der Platte (9) näher ist, drehbar befestigt ist.

6. Magneto-optisches System nach Anspruch 5, wobei der Träger (16) aus einem magnetischen Material gebildet ist und Teil der Bahn des Magnetflusses bildet, der durch den Polschuh (10) hindurchgeht.

7. Magneto-optisches System nach Anspruch 5 oder Anspruch 6, wobei der Polschuh (10) eine Oberfläche aufweist, die bezüglich der Oberfläche der Platte (9) in ihrer ersten Position abgeschrägt ist.

8. Magneto-optisches System nach einem der Ansprüche 5 bis 7, wobei der Polschuh (10) einen ersten Streifen (10i) und einen zweiten Streifen (10j) umfaßt, welche gegeneinander geneigt sind und miteinander verbunden sind, wobei der zweite Streifen (10j) sich in Kontakt mit dem Träger (16) befindet, wenn sich der Polschuh (10) in der ersten Position befindet.

**Revendications**

1. Système comportant un disque (1) monté à rotation et enfermé dans une cassette (22) munie d'une fenêtre (1b), un générateur de champ magnétique qui comporte un aimant ayant une pièce polaire (10) sur une face d'une plaque magnétique (9) et une bobine (11) en contact avec la face de la plaque (9), enroulée à plat autour de la pièce polaire (10) en s'étalant radialement, pour produire un champ magnétique à travers la pièce polaire (10) quand on fait passer un courant électrique dans la bobine (11), caractérisé en ce que, dans un système magnéto-optique, une partie de la pièce polaire (10) est susceptible de s'avancer au-delà de la bobine (11) et dans la fenêtre (1b).

2. Système magnéto-optique selon la revendication 1, dans lequel la pièce polaire (10) est fixée de façon sensiblement perpendiculaire à la face de la plaque (9).

3. Système magnéto-optique selon la revendication 1, dans lequel la pièce polaire (10) est montée sur la plaque (9) de manière à pouvoir tourner autour d'un axe (15) parallèle à la face de la plaque (9).

4. Système magnéto-optique selon la revendication 3, comportant un élément élastique (17) qui maintient la pièce polaire (10) suivant un angle spécifié par rapport à la face de la plaque (9), et une plaque de guidage (18) à l'extrémité de la pièce polaire (10) qui fait tourner la pièce polaire (10) pour qu'elle soit parallèle à la face de la plaque (9) quand on applique vers la face de la plaque (9) une force horizontale (f2) plus grande que la force due à l'élément élastique (17).

5. Système magnéto-optique selon la revendication 3 ou la revendication 4, comportant un support (16) fixé sur la face de la plaque (9), la pièce polaire (10) étant montée à rotation sur le support (16) pour prendre une première position dans laquelle une extrémité de la pièce polaire (10) est en saillie sur la face de la bobine (11) à l'opposé de la plaque (9) et une seconde position dans laquelle l'extrémité de la pièce polaire (10) est plus rapprochée de la plaque (9).

6. Système magnéto-optique selon la revendication 5, dans lequel le support (16) est constitué en un matériau magnétique et fait partie d'un trajet du flux magnétique qui passe dans la pièce polaire (10).

7. Système magnéto-optique selon la revendication 5 ou la revendication 6, dans lequel la pièce polaire (10) a, dans sa première position, une surface inclinée par rapport à la face de la plaque (9).

8. Système magnéto-optique selon l'une quelconque des revendications 5 à 7, dans lequel la pièce polaire (10) comporte une première bande (10i) et une seconde bande (10j) qui sont inclinées l'une par rapport à l'autre et qui sont assemblées, la seconde bande (10j) étant en contact avec le support (16) quand la pièce polaire (10) est dans la première position.

# FIG. I

# FIG. 2

# FIG.3

# FIG.4

## FIG.5A

## FIG.5B

## FIG.5C

# FIG.6

9

11

11e 11d 11c 11b 11a    10

14    13

# FIG.7

MAGNETIC FIELD COMPONENT By(gauss)

14a
14b
14c
14d
14e

200

100

-12 -8 -4  0  4  8  12

DISTANCE FROM CENTER OF
LENGTH OF POLE PIECE 10 (mm)

# FIG. 8A

# FIG. 8B

# FIG. 8C

FIG.8D

FIG.8E

# FIG.9A

# FIG.9B

# FIG.9C

# FIG.10

# FIG.11

# FIG.12

# FIG.13

# FIG. 14